# EUROPEAN PATENT APPLICATION

(11) **EP 4 438 447 A1**
(43) Date of publication of application: **02.10.2024**
(21) Application number: 24165031.6
(22) Date of filing: 21.03.2024
(51) Int. Cl.: B62D 57/024

(54) **PIPE CLIMBING ROBOT**

(30) Priority: 28.03.2023 CN 202310312655
(71) Applicant: Shenzhen Aka Robotics Technology Co., Ltd., Shenzhen, Guangdong 518108 (CN)
(72) Inventor: WANG, Xingchao, Shenzhen (CN); CAI, Jiannan, Shenzhen (CN); HU, Shaojie, Shenzhen (CN); ZHU, Weidong, Shenzhen (CN); LI, Jiuhua, Shenzhen (CN)
(74) Representative: Ashton, Gareth Mark

(57) **Abstract**

A pipe climbing robot including a veering mechanism is disclosed. A control box (5) is arranged at a top of the veering mechanism. The veering mechanism is powered by a single motor. Each of a plurality of driving units is connected with the veering mechanism at each of four corners of a bottom of the veering mechanism. Each of the plurality of driving units includes two driving wheels (1). A lower part of each of the plurality of driving units is connected with an adsorption apparatus (2) through an adjusting mechanism. The adsorption apparatus (2) has an adjustable adsorption force. Each of the plurality of driving units is connected with the veering mechanism through a curvature self-adaptive mechanism (6).

## Description

### TECHNICAL FIELD

The present disclosure relates to the technical field of pipe maintenance, and particularly to a pipe climbing robot.

### BACKGROUND

A pipe climbing robot, loaded with various maintenance apparatuses, is used for pipe cleaning, derusting or coating, etc., which is suitable for an inner surface or an outer surface of a pipe, thus achieving purposes of simple maintenance of pipe facilities, an improvement of operation efficiency, and risk reductions for operators.

Most pipe climbing robots with Mecanum wheels have poor loading capacities and poor passing abilities when the robots pass through small obstacles such as a weld. Most pipe climbing robots with ordinary wheels that use enclosed structures lead to a small adaptation range of a pipe diameter. Pipe climbing robots with ordinary wheels that use non-enclosed structure are difficult to veer on a curved surface. Bionic pipe climbing robots are difficult to control, slow to travel and inconvenient to load tools.

For example, in a Chinese Patent Application No. CN202120704942.3, titled "NON-SURROUNDING PERMANENT MAGNET ADSORPTION TYPE OBSTACLE-CROSSING PIPE CLIMBING ROBOT", a pipe climbing robot with Mecanum wheels can complete axial movement and circumferential movement on a pipe, but its structure is complicated. Roller wear of the Mecanum wheels is more serious than roller wear of the ordinary wheels, and there will always be continuous vibrations during a movement of the robot. A magnetic adsorption apparatus is arranged in such a way that a force on a vehicle body of the robot is large, therefore the loading capacity is limited. However, a split design may better deal with generally complex pipes.

### SUMMARY

The present disclosure is intended to overcome the defects in existing technology, and a pipe climbing robot is disclosed herein.

In order to achieve the above purpose, the following technical scheme is adopted in the present disclosure.

In an embodiment, a pipe climbing robot includes a veering mechanism. A control box is arranged at a top of the veering mechanism. The veering mechanism is powered by a single motor. Each of a plurality of driving units is connected with the veering mechanism at each of four corners of a bottom of the veering mechanism. Each of the driving units includes two driving wheels. A lower part of each of the plurality of driving units is connected with an adsorption apparatus through an adjusting mechanism. An adsorption force of the adsorption apparatus is adjustable. Each of the plurality of driving units is connected with the veering mechanism through a curvature self-adaptive mechanism.

In an implementation, the driving unit includes two driving wheels respectively arranged on two sides of a wheel housing. A gear motor which synchronously drives the two driving wheels to rotate is arranged in the wheel housing for providing power required for a movement of the robot.

In an implementation, the veering mechanism includes two fixing plates. Each of four driven synchronous pulleys is arranged at each of four corners between the two fixing plates. Each of the driven synchronous pulleys and the wheel housing of the corresponding driving unit are in a transmission connection through a shaft. A driving synchronous pulley and two tensioners are also arranged between the two fixing plates. The driving synchronous pulley, two tensioners and four driven synchronous pulleys are in a transmission connection through a synchronous belt. A veering motor is arranged at a bottom of a lower one of the two fixing plates for driving the driving synchronous pulley. A plurality of tension pulleys are also arranged at the bottom of the lower one of the two fixing plates configured to provide a tensioning force for the synchronous belt.

In an implementation, the curvature self-adaptive mechanism includes a copper bushing which is arranged at a lower end of the shaft, and a copper bushing seat which is arranged outside the copper bushing and connected with one of the plurality of driving units.

In an implementation, the adsorption apparatus includes a magnet and a protective sleeve arranged outside the magnet.

In an implementation, the adjusting mechanism includes an inner fixing plate arranged below the gear motor. An adjusting plate is arranged above the inner fixing plate. Two control rods are inserted into two ends of the adjusting plate. The two control rods are respectively connected with two ends of the protective sleeve through pin shafts. A lower section of the control rod and a limiting spring sleeved outside the lower section of the control rod forms a spring limiting structure between the control rod and the inner fixing plate. An adjusting bolt is inserted into a lower end of the inner fixing plate. An upper end of the adjusting bolt is screwed into a center of the adjusting plate.

The beneficial effects of the present disclosure obtained by adopting the above technical scheme are as follows.

In the present disclosure, ordinary wheels, as driving wheels, makes the structure simple, reliable and durable. The curvature self-adaptive mechanism is adopted to increases an applicable pipe diameter range, so as to achieve a universality of an inner wall and an outer wall, and no manual adjustment is required. A veering mechanism with zero-turning-radius is adopted to solve a problem of curved surface veering difficulties. A magnetic air gap self-adaptive adjusting mechanism is adopted to avoid a stuck problem caused by an excessively small magnetic air gap. The adsorption force is large and stable. The loading capacity is strong. Four-wheel driving is adopted such that the driving force are more sufficient and stable.

### BRIEF DESCRIPTION OF THE DRAWINGS

FIG. 1 is a schematic view of an entire structure of a pipe climbing robot according to an embodiment;
FIG. 2 is a bottom view of the pipe climbing robot according to an embodiment;
FIG. 3 is a front view of the pipe climbing robot according to an embodiment;
FIG. 4 is a top view of the pipe climbing robot according to an embodiment;
FIG. 5 is a schematic view of an air gap self-adaptive adjusting mechanism in the pipe climbing robot according to an embodiment; and
FIG. 6 is a schematic view of a curvature self-adaptive mechanism in the pipe climbing robot according to an embodiment.

Reference numbers: 1: driving wheel; 2: adsorption apparatus; 3: tension pulley; 4: veering motor; 5: control box; 6: curvature self-adaptive mechanism; 7: adjusting bolt; 8: limiting spring; 9: control rod; 10: fixing plate; 11: gear motor; 12: shaft; 13: inner fixing plate; 14: driven synchronous pulley; 15: pin shaft; 16: protective sleeve; 17: copper bushing; 18: copper bushing seat; 19: driving synchronous pulley; 20: tensioner 21: adjusting plate; and 22: synchronous belt.

### DETAILED DESCRIPTION

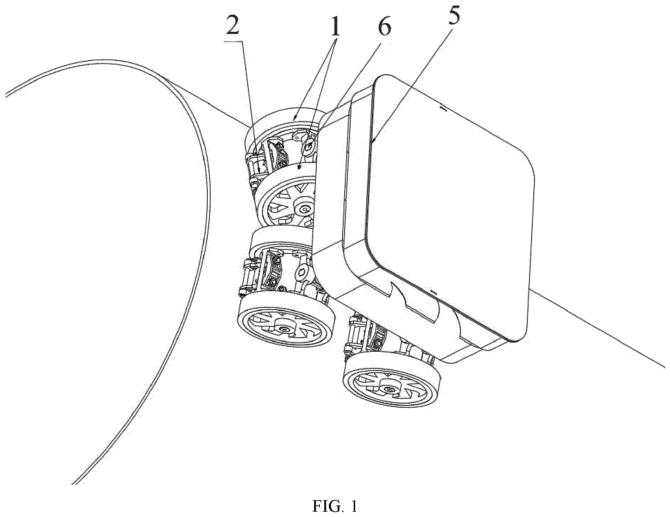

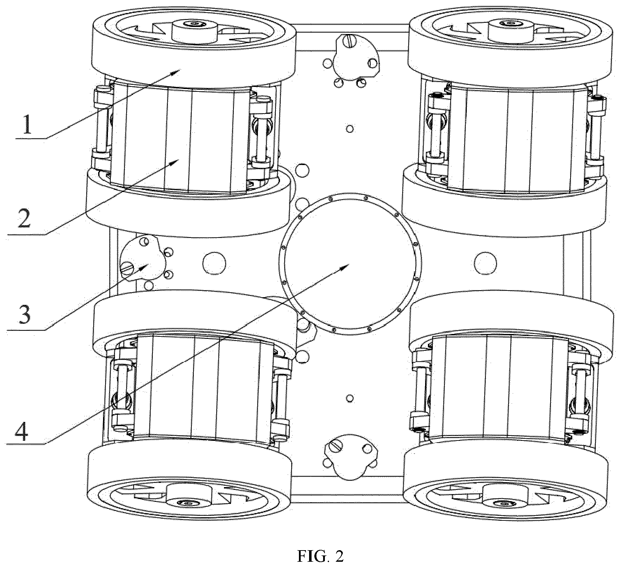

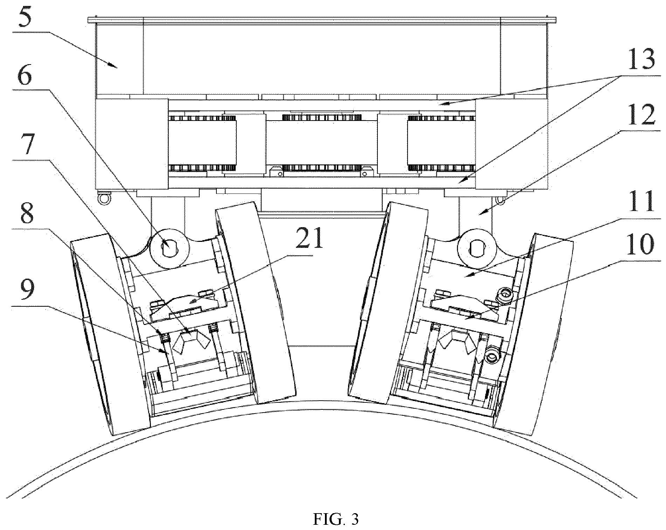

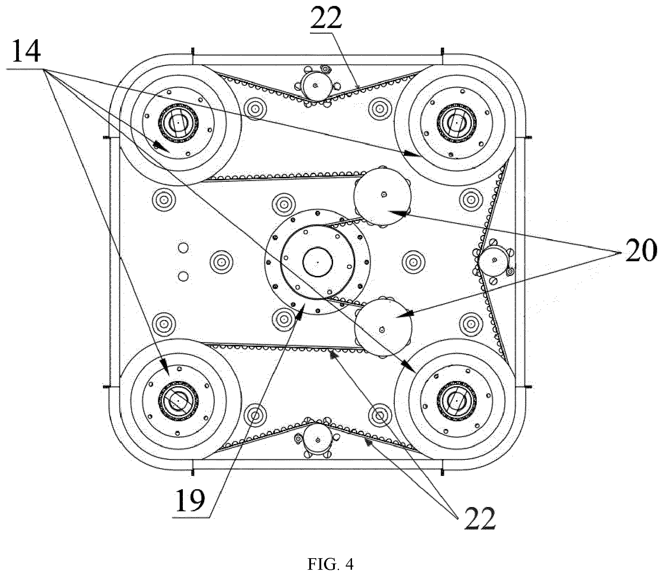

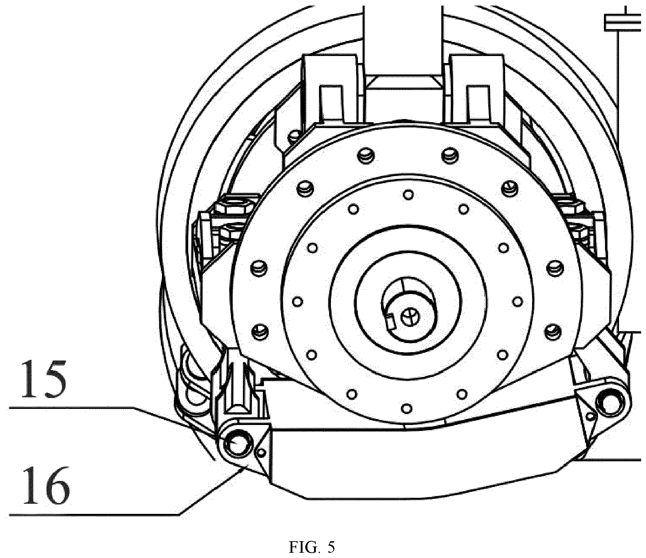

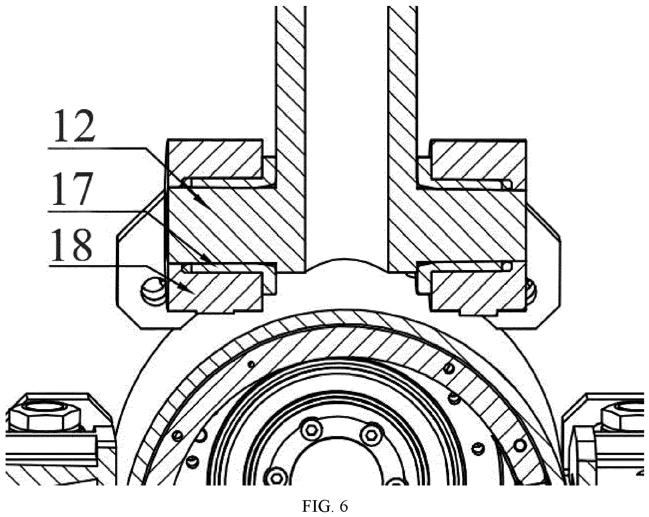

Implementations of a pipe climbing robot according to the present disclosure are further described hereinafter with reference to FIG. 1 to FIG. 6. The pipe climbing robot according to the present disclosure is not limited to the descriptions in the following embodiments.

In an embodiment, a pipe climbing robot is provided, as shown in FIG. 1 to FIG. 6. The pipe climbing robot includes a veering mechanism. A control box 5 is arranged at a top of the veering mechanism. The veering mechanism is powered by a single motor. A driving unit is connected with the veering mechanism at each of four corners of a bottom of the veering mechanism. The driving unit includes two driving wheels 1. A lower part of the driving unit is connected with an adsorption apparatus 2 through an adjusting mechanism. An adsorption force of the adsorption apparatus is adjustable. The driving unit is connected with the veering mechanism through a curvature self-adaptive mechanism 6.

In an implementation, the driving unit includes two driving wheels 1 and a gear motor 11. The two driving wheels 1 respectively arranged on two sides of a wheel housing. The gear motor 11 which synchronously drives the two driving wheels 1 to rotate is arranged in the wheel housing for providing power required for movement of the robot.

In an implementation, the veering mechanism includes two fixing plates 13. A driven synchronous pulley 14 is arranged at each of four corners between the two fixing plates 13. The driven synchronous pulley 14 and the wheel housing of the corresponding driving unit are in a transmission connection through a shaft 12. A driving synchronous pulley 19 and two tensioners 20 are also arranged between the two fixing plates 13. The driving synchronous pulley 19, the two tensioners 20 and four driven synchronous pulleys 14 are in a transmission connection through a synchronous belt 22. A veering motor 4 is arranged at a bottom of a lower one of the two fixing plates 13 for driving the driving synchronous pulley 19. A plurality of tension pulleys 3 are also arranged at the bottom of the lower one of the two fixing plates 13 for providing a tensioning force for the synchronous belt 22.

Four driven synchronous pulleys 14, two tensioners 20 and a plurality of tension pulleys 3 are configured to be connected with the driving synchronous pulley 19 through the synchronous belt 22. The driving synchronous pulley 19 is powered by the veering motor 4. When the pipe climbing robot is veering, the veering motor 4 is configured to drive the driving synchronous pulley 19 to transmit a torque to the driven synchronous pulleys 14 through the synchronous belt 22, and the driven synchronous pulleys 14 are in turn configured to drive the driving units to rotate through the shaft 12, so as to realize veer of the pipe climbing robot.

In an implementation, the curvature self-adaptive mechanism 6 includes a copper bushing 17 and a copper bushing seat 18. The copper bushing 17 is arranged at a lower end of the shaft 12. The copper bushing seat 18 is arranged outside the copper bushing 17. The copper bushing seat 18 is connected with the driving unit.

When the robot is placed on a curved surface, the adsorption force of the adsorption apparatus and a support force received by the driving wheel 1 together generates a deflection torque to deflect the whole driving unit, such that the driving wheels 1 at two sides of the gear motor 11 fit to the curved surface to realize curvature adaptation. There is no need for a diameter measuring apparatus or any additional driving apparatuses. A multi-connecting rods mechanism has a low loading capacity, insufficient rigidity and ease of being stuck; additional power apparatuses also increase a complexity of a control system. Compared with a multi-connecting rods type screw adjusting apparatus, the veering mechanism of the pipe climbing robot has the following advantages: a simple structure, stability, convenience, ease of maintenance and a high loading capacity.

In an implementation, the adsorption apparatus 2 includes a magnet (not shown) and a protective sleeve 16 arranged outside the magnet. The magnet and the protective sleeve 16 are placed under the gear motor 11 and between the two driving wheels 1 at two sides of the gear motor 11. This structure has obvious advantages compared with some schemes in which the adsorption apparatus 2 is arranged at a vehicle body, for example, the adsorption apparatus 2 is directly connected with the driving unit, and the adsorption force is directly transmitted to the driving unit to produce a friction to drive the vehicle body, without transmitting the adsorption force to the driving wheel through the vehicle body. In such a way, rigidity and strength requirements of the vehicle body are low, which is at least beneficial to increase the loading capacity and reduce a weight of the vehicle body.

Meanwhile, when the pipe climbing robot moves on the curved surface, since angles of fit of driving wheels with different curvatures (angles of the driving wheels and the vehicle body) are different, the adsorption apparatus 2 of the present disclosure is deflected together with the driving mechanism, and the adsorption force provided by the adsorption apparatus 2 is always approximately parallel to the support force received by the driving wheels. In such a way, the utilization rate of the adsorption apparatus 2 is high, and a distance between the adsorption apparatus 2 and a surface of a pipe is kept in a relatively stable range. The distance will not change greatly with a change of the curvature, and will not change greatly because the surface of the pipe on which a certain driving wheel is located is higher. Therefore, A stable and reliable adsorption force is provided.

In an implementation, the (manual) adjusting mechanism mainly includes an inner fixing plate 10 arranged below the gear motor 11. An adjusting plate 21 is arranged above the inner fixing plate 10. Two control rods 9 are inserted into two ends of the adjusting plate 21. The two control rods 9 are respectively connected with two ends of the protective sleeve 16 through pin shafts 15. A lower section of the control rod 9 and a limiting spring 8 sleeved outside the lower section of the control rod 9 together forms a spring limiting structure between the control rod 9 and the inner fixing plate 10. An adjusting bolt 7 is inserted into a lower end of the inner fixing plate 10. An upper end of the adjusting bolt 7 is screwed into a center of the adjusting plate 21.

In an implementation, air gap self-adaptive adjustment between the pin shaft 15 and a lifting lug at the protective sleeve 16 of the magnet is realized by a proper diameter difference, that is, a diameter of the pin shaft 15 is slightly smaller than an aperture of the lifting lug at the protective sleeve 16. The protective sleeve 16 and the magnet wrapped by the protective sleeve 16 may move freely within a certain range. In such a way, the adsorption apparatus 2 can avoid being stuck by a protruding flaw at a surface of a pipe.

Following advantages will become obvious by adopting the technical scheme described above.

A total of four magnetic adsorption units (adsorption apparatuses 2) are respectively arranged below four driving assemblies (driving units) for providing the adsorption force, such that the driving wheels have sufficient friction to drive the vehicle body to move. The curvature self-adaptive mechanism 6 can cooperate with the magnetic adsorption unit to allow the driving assembly deflect with a proper angle at a surface of a pipe with different curvatures, thereby fitting the driving wheels 1 to the curved surface. Changing a heading direction of the vehicle body with a zero-turning-radius and a position of the vehicle body basically unchanged at the same time are realized. The veering mechanism is connected with the driving assembly through the curvature self-adaptive mechanism 6. The driving assembly provides a driving force. A control module is configured to coordinate various power components.

A working principle of the pipe climbing robot is briefly described as follows. As shown in FIG. 1 to FIG. 6, the driving unit including two driving wheels 1 and one gear motor 11 is arranged at each of four corners of the vehicle body of the pipe climbing robot. The driving units are responsible for providing a power required for movement of the robot. A total of four driving units are respectively connected with the veering mechanism through the curvature self-adaptive mechanism 6. The curvature self-adaptive mechanism 6 includes the copper bushing seat 18, the shaft 12 and the copper bushing 17. When the robot travels along the curved surface, the driving units may be deflected by the torque produced by a direction change of the adsorption force of the adsorption apparatus, thereby achieving curvature self-adaption.

The adsorption apparatus 2 includes the magnet and the protective sleeve 16 of the magnet, both of which are connected with the driving unit through the adjusting mechanism. The adjusting mechanism includes the adjusting bolt 7, the limiting spring 8, the control rod 9, the fixing plate 10 and the pin shaft 15. The fixing plate 10 is fixedly connected to an outer housing of the gear motor 11. The adjusting bolt 7 is used for manual adjustment in a large range and is locked after being adjusted to a proper position. The air gap self-adaptive adjustment between the pin shaft 15 and the lifting lug at the protective sleeve 16 of the magnet is realized by a certain diameter difference. In such a way, the adsorption apparatus 2 can avoid being stuck by a protruding flaw at the surface of the pipe.

The adsorption apparatus 2 is directly connected with the driving unit, and the adsorption force is directly transmitted to the driving unit to produce a friction to drive the vehicle body, without transmitting the adsorption force to the driving wheel through the vehicle body. In such a way, rigidity and strength requirements of the vehicle body are low, which is at least beneficial to increase the loading capacity and reduce a weight of the vehicle body.

Meanwhile, when the pipe climbing robot moves on the curved surface, since angles of fit of driving wheels with different curvatures (angles of the driving wheels and the vehicle body) are different, the adsorption apparatus 2 of the present disclosure is deflected together with the driving mechanism, and the adsorption force provided by the adsorption apparatus 2 is always approximately parallel to the support force received by the driving wheels. In such a way, the utilization rate of the adsorption apparatus 2 is high, and a distance between the adsorption apparatus 2 and a surface of a pipe is kept in a relatively stable range. The distance will not change greatly with a change of the curvature, and will not change greatly because the surface of the pipe on which a certain driving wheel is located is higher. Therefore, A stable and reliable adsorption force is provided.

The veering mechanism includes the veering motor 4, the synchronous belt 22, the tension pulley 3, the shaft 12, the driven synchronous pulley 14 and the upper and lower fixing plates 13. When veering is required, the veering motor 4 is driven to run, and four driven synchronous pulleys 14 are driven by the veering motor 4 at the same time. The driven synchronous pulleys 14 are configured to transmit torques to the driving units through the shafts 12, thereby achieving stepless veering with a zero-turning-radius.

The above describes some implementations of the present disclosure with reference to the drawings, but the present disclosure should not be considered as being limited to these implementations. Some deductions or substitutions without departing from the concept of the present disclosure may be obvious by those having ordinary skills in the art after reading the above description. These deductions or substitutions should be regarded as belonging to the scope of protection of the present disclosure.

## Claims

1. A pipe climbing robot, **characterized in that** it comprises:
a veering mechanism comprising a control box (5) at a top of the veering mechanism;
wherein, the veering mechanism is powered by a single motor;
wherein, each of a plurality of driving units connects with the veering mechanism at each of four corners of a bottom of the veering mechanism;
wherein, each of the plurality of driving units comprises two driving wheels (1), and connects with an adsorption apparatus (2) at a lower part of the driving unit through an adjusting mechanism;
wherein, an adsorption force of the adsorption apparatus (2) is adjustable; and
wherein, each of the plurality of driving unit connects with the veering mechanism through a curvature self-adaptive mechanism (6).

2. The pipe climbing robot according to claim 1, **characterized in that** each of the plurality of driving units comprises two driving wheels (1) respectively arranged on two sides of a wheel housing, and a gear motor (11) configured to synchronously drive the two driving wheels (1) to rotate is arranged in the wheel housing for providing a power required for a movement of the robot.

3. The pipe climbing robot according to claim 2, **characterized in that** the veering mechanism comprises two fixing plates (13);
wherein, each of four driven synchronous pulleys (14) is arranged at each of four corners between the two fixing plates (13);
wherein, each of the four driven synchronous pulleys (14) and the wheel housing of the corresponding driving unit are in a transmission connection through a shaft (12);
wherein, a driving synchronous pulley (19) and two tensioners (20) are arranged between the two fixing plates (13);
wherein, the driving synchronous pulley (19), two tensioners (20) and four driven synchronous pulleys (14) are in a transmission connection through a synchronous belt (22);
wherein, a veering motor (4) is arranged at a bottom of a lower one of the two fixing plates (13) and configured to drive the driving synchronous pulley (19); and
wherein, a plurality of tension pulleys (3) are arranged at the bottom of the lower one of the two fixing plates (13) and configured to provide a tensioning force for the synchronous belt (22).

4. The pipe climbing robot according to claim 3, **characterized in that** the curvature self-adaptive mechanism (6) comprises a copper bushing (17) which is arranged at a lower end of the shaft (12), and a copper bushing seat (18) which is arranged outside the copper bushing (17) and connected with one of the plurality of driving units.

5. The pipe climbing robot according to any preceding claim, **characterized in that** the adsorption apparatus (2) comprises a magnet and a protective sleeve (16) arranged outside the magnet.

6. The pipe climbing robot according to claim 5, **characterized in that** the adjusting mechanism comprises an inner fixing plate (10) arranged below the gear motor (11);
wherein, an adjusting plate (21) is arranged above the inner fixing plate (10);
wherein, two control rods (9) are inserted into two ends of the adjusting plate (21), and respectively connected with two ends of the protective sleeve (16) through pin shafts (15);
wherein, a lower section of the control rod (9) and a limiting spring (8) sleeved outside the lower section of the control rod (9) forms a spring limiting structure between the control rod (9) and the inner fixing plate (10);
wherein, an adjusting bolt (7) is inserted into a lower end of the inner fixing plate (10); and
wherein, an upper end of the adjusting bolt (7) is screwed into a center of the adjusting plate (21).
